# EUROPÄISCHE PATENTSCHRIFT

(11) **EP 0 793 455 B1**
(45) Veröffentlichungstag und Bekanntmachung des Hinweises auf die Patenterteilung: **18.11.1998**
(21) Anmeldenummer: 95930472.6
(22) Anmeldetag: 16.08.1995
(51) Int. Cl.: A61C 17/26

(54) **BÜRSTENTEIL FÜR EINE ELEKTRISCHE ZAHNBÜRSTE**
HEAD FOR AN ELECTRIC TOOTHBRUSH
ELEMENT DE BROSSAGE POUR UNE BROSSE A DENTS ELECTRIQUE

(30) Priorität: 29.10.1994 DE 4438731
(43) Veröffentlichungstag der Anmeldung: 10.09.1997
(73) Patentinhaber: Braun Aktiengesellschaft, Frankfurt am Main (DE)
(72) Erfinder: HILFINGER, Peter, D-61350 Bad Homburg (DE); KRESSNER, Gerhard, D-63674 Altenstadt (DE); HERZOG, Karl, D-60489 Frankfurt am Main (DE); DRIESEN, Georges, D-61276 Weilrod (DE)
(86) Internationale Anmeldenummer: EP9503256
(87) Internationale Veröffentlichungsnummer: WO9613223

(56) Entgegenhaltungen:
- EP-A- 0 259 648
- WO-A-91/03187
- WO-A-91/13570

## Beschreibung

Die Erfindung betrifft ganz allgemein eine elektrische Zahnbürste und insbesondere ein Bürstenteil für eine elektrische Zahnbürste nach den Merkmalen des Oberbegriffs des Patentanspruchs 1.

Ein derartiges Bürstenteil ist aus der Internationalen Patentanmeldung WO 91/13570 (PCT/US90/02825) bekannt. Dort ist eine elektrische Zahnbürste beschrieben, die ein Griffteil aufweist, aus dem eine Antriebsstange herausragt. In dem Griffteil sind Antriebsmittel untergebracht, mit deren Hilfe die Antriebsstange in eine oszillierende Bewegung in Richtung ihrer Längsachse versetzt werden kann. Auf das Griffteil und die Antriebsstange kann ein in Richtung der Längsachse sich erstreckendes Bürstenteil aufgesteckt werden, das ein Trägerrohr aufweist, an dessen Ende zwei Borstenträger angeordnet sind. In dem Trägerrohr ist eine Stange untergebracht, die im aufgesteckten Zustand mit der Antriebsstange gekoppelt ist. Die beiden Borstenträger sind um quer zur Längsachse angeordnete Bürstenachsen drehbar gelagert, so daß die von den beiden Borstenträgern abstehenden Borsten etwa parallel zueinander verlaufen und einander zugewandt sind. Mit Hilfe von zwischen den beiden Borstenträgern und damit im Bereich der Borsten angeordneten Kopplungsmitteln wird die von der Antriebsstange auf die Stange des Bürstenteils übertragene oszillierende Längsbewegung derart umgelenkt, daß die beiden Borstenträger im eingeschalteten Zustand der elektrischen Zahnbürste eine oszillierende Drehbewegung um ihre Bürstenachsen ausführen. Führt ein Benutzer die zu reinigenden Zähne zwischen die beiden Borstenträger ein, so kann mit Hilfe der von den beiden Borstenträgern abstehenden Borsten eine Reinigung der Zähne erfolgen. Die zwischen den Borstenträgern und damit im Bereich der Borsten angeordneten Kopplungsmittel haben sich dabei jedoch als hinderlich herausgestellt.

Aufgabe der Erfindung ist es, ein Bürstenteil für eine elektrische Zahnbürste zu schaffen, mit dem eine für den Benutzer verbesserte Zahnreinigung erreichbar ist.

Entsprechend der Erfindung wird diese Aufgabe bei einem Bürstenteil der eingangs genannten Art durch die Merkmale des kennzeichnenden Teils des Patentanspruchs 1 gelöst.

Durch die Anordnung der beiden Bürstenachsen in einer bevorzugt, aber nicht zwingend, etwa rechtwinklig zur Längsachse angeordneten Ebene sowie durch die Vorsehung etwa eines rechten Winkels zwischen den beiden Bürstenachsen wird erreicht, daß die Kopplungsmittel nicht mehr zwischen den beiden Borstenträgern und damit im Bereich der Borsten angeordnet werden müssen, sondern daß die Kopplungsmittel auf der von den Borsten abgewandten Seite der Borstenträger angeordnet werden können. Eine Behinderung der Zahnreinigung durch irgendwelche Koppungsmittel ist somit nicht mehr möglich, so daß die Zahnreinigung für den Benutzer wesentlich vereinfacht und damit verbessert ist. Natürlich können die Bürstenachsen auch in einem spitzen oder stumpfen Winkel zur Längsachse angeordnet sein. Die erfindungsgemäße Anordnung der Bürsten sorgt auch dafür, daß die zu reinigenden Zahnoberflächen eines Zahnes im wesentlichen vollflächig von den Bürsten bzw. Borsten überstrichen werden, ohne daß eine geänderte Positionierung der Bürste bzgl. des Zahnes erforderlich wird.

Bei einer vorteilhaften Ausgestaltung der Erfindung nach dem Patentanspruch 2 wird die oszillierende Drehbewegung der Antriebsstange mit Hilfe zweier Pleuel auf die beiden Borstenträger übertragen. Dies stellt eine einfache und damit kostengünstige Konstruktion der Kopplungsmittel dar. Auch ermöglicht diese Konstruktion eine schnelle und einfache Montage des Bürstenteils.

Besonders vorteilhaft ist es dabei, wenn entsprechend dem Patentanspruch 3 die beiden Pleuel jeweils außermittig mit der Welle und mit den beiden Borstenträgern verbunden sind. Dies ermöglicht eine einfache und zuverlässige Übertragung der oszillierenden Drehbewegung von der Welle auf die beiden Borstenträger.

Bei einer zweckmäßigen Weiterbildung nach dem Patentanspruch 4 stehen von der Welle und den beiden Borstenträgern jeweils Stifte ab, die entsprechenden Ösen der Pleuel zugeordnet sind. Die Stifte sind dabei beispielsweise in die Welle und die Borstenträger eingepreßt. Wird die Welle in eine oszillierende Drehbewegung um ihre Längsachse versetzt, so wird diese Drehbewegung über den außermittig in die Welle eingesteckten Stift, das auf den Stift aufgesteckte Pleuel und die außermittig in die Borstenträger eingesteckten Stifte jeweils auf die zugehörigen Borstenträger übertragen. Insgesamt stellt die beschriebene Weiterbildung eine einfache und zuverlässige Konstruktion dar, die des weiteren eine schnelle und kostengünstige Herstellung des Bürstenteils ermöglicht.

Bei einer vorteilhaften Ausgestaltung der Erfindung nach dem Patentanspruch 5 wird die oszillierende Längsbewegung der Stange mit Hilfe zweier Pleuel auf die beiden Borstenträger übertragen. Dies stellt eine weitere Möglichkeit einer einfachen und damit kostengünstigen Konstruktion der Kopplungsmittel dar.

Besonders vorteilhaft ist es dabei, wenn entsprechend dem Patentanspruch 6 die beiden Pleuel einerseits mit der Stange sowie andererseits jeweils außermittig mit den beiden Borstenträgern verbunden sind.

Bei einer zweckmäßigen Weiterbildung nach dem Patentanspruch 7 stehen von der Stange und den beiden Borstenträgern jeweils Stifte ab, die entsprechenden Ösen der Pleuel zugeordnet sind. Die Stifte sind dabei beispielsweise in die Stange und die Borstenträger eingepreßt. Wird die Stange in eine oszillierende Längsbewegung versetzt, so wird diese Bewegung über den in die Stange eingesteckten Stift, die auf den Stift aufgesteckten Pleuel und die außermittig in die Borstenträger eingesteckten Stifte jeweils auf die zugehörigen Borstenträger übertragen. Insgesamt stellt dies eine einfache und zuverlässige Konstruktion dar, die eine kostengünstige Herstellung des Bürstenteils erlaubt.

Bei einer vorteilhaften Ausgestaltung der Erfindung nach dem Patentanspruch 8 weisen die Ösen und die Stifte ausreichend Spiel zueinander auf, so daß eine räumliche Bewegung der Pleuel möglich ist. Die durch die Stifte und die aufgesteckten Ösen der Pleuel gebildeten Gelenke weisen somit ähnliche Freiheitsgrade auf wie ein Kugelgelenk, sind jedoch hinsichtlich ihrer konstruktiven Ausgestaltung und ihrer Herstellung wesentlich einfacher und damit kostengünstiger.

Bei einer weiteren vorteilhaften Ausgestaltung der Erfindung nach dem Patentanspruch 9 bestehen die beiden Pleuel aus gebogenem Rundmetall. Dies hat den Vorteil, daß die Pleuel einerseits stabil genug sind, um die Bewegungen der Welle oder der Stange auf die Borstenträger zu übertragen, daß andererseits jedoch durch die zumindest leicht federnde Eigenschaft des Rundmetalls die gesamte Konstruktion einen weiteren Freiheitsgrad aufweist, mit dessen Hilfe die Übertragung der Bewegung von der Welle oder der Stange auf die Borstenträger weiter erleichtert und damit verbessert wird.

Bei einer vorteilhaften Ausgestaltung der Erfindung nach dem Patentanspruch 10 wird die oszillierende Längsbewegung der Stange mit Hilfe einer Querstange auf die beiden Borstenträger übertragen. Dies stellt eine weitere Möglichkeit einer einfachen und damit kostengünstigen Konstruktion der Kopplungsmittel dar.

Bei einer zweckmäßigen Weiterbildung nach dem Patentanspruch 11 stehen von den beiden Borstenträgern jeweils Stifte ab, die entsprechenden Schlitzen der Querstange zugeordnet sind. Wird die Stange in eine oszillierende Längsbewegung versetzt, so wird diese Bewegung über die fest mit der Stange verbundene Querstange und den durch den Schlitz hindurchgesteckten Stift jeweils auf den zugehörigen Borstenträger übertragen. Insgesamt stellt dies eine einfache und zuverlässige Konstruktion dar, die eine kostengünstige Herstellung des Bürstenteils erlaubt.

Bei einer besonders vorteilhaften Ausgestaltung der Erfindung nach dem Patentanspruch 12, sind die beiden Borstenträger an Armen befestigt, die schwenkbar zueinander angeordnet sind. Damit wird erreicht, daß die beiden Borstenträger auseinander- und zusammengedrückt werden können. Der Winkel, unter dem die von den beiden Borstenträgern abstehenden Borsten zueinander angeordnet sind, kann auf diese Weise verändert und somit optimal an die Dicke der jeweils zu reinigenden Zähne angepaßt werden. Dadurch können Schneidezähne wie auch Backenzähne gleichmäßig gereinigt werden.

Bei einer vorteilhaften Weiterbildung nach dem Patentanspruch 13 wird der Winkel, unter dem die von den beiden Borstenträgern abstehenden Borsten zueinander angeordnet sind, durch eine Feder beeinflußt. Ist die Kraft, mit der ein Benutzer die beiden Borstenträger auf die zu reinigenden Zahnflächen aufsetzt, zu groß, so werden die Borstenträger auseinandergedrückt und damit die Aufsetzkraft verringert. Ist umgekehrt die Kraft zu gering, so drückt die Feder die beiden Borstenträger in Richtung der Ausgangslage wieder zusammen, was einer Erhöhung der Aufsetzkraft entspricht. Insgesamt wird somit durch die Feder eine in weiten Bereichen etwa konstante Aufsetzkraft der Borsten auf die zu reinigenden Zahnflächen erreicht. Zweckmäßig ist es dabei, wenn die beiden Borstenträger in der Ausgangslage einen minimalen Winkel zueinander aufweisen, insbesondere einen Winkel, der kleiner ist als 90 Grad, beispielsweise etwa 80 Grad. Im auseinandergedrückten Zustand ist es zweckmäßig, wenn der Winkel zwischen den beiden Borstenträgern größer ist als 90 Grad, insbesondere etwa 100 Grad.

Bei einer vorteilhaften Weiterbildung nach dem Patentanspruch 14 sind die Welle und die beiden Arme mit den Borstenträgern auf demselben Lagerstift gelagert. Wird dieses Lager durch Zahnpastareste oder dergleichen verschmutzt, so werden derartige Verschmutzungen, die die Schwenkbarkeit der beiden die Borstenträger haltenden Arme und damit der beiden Borstenträger behindern, durch die Bewegung der Welle wieder weggesprengt. Die Borstenträger bleiben somit in jedem Fall voll funktionsfähig und der Benutzer kann gleichbleibend gute Reinigungsergebnisse mit dem Bürstenteil erreichen.

Bei einer vorteilhaften Ausgestaltung der Erfindung nach dem Patentanspruch 15 sind die Borstenträger in mindestens einer Richtung oval ausgestaltet. Dadurch wird eine verbesserte Reinigungswirkung erreicht.

Besonders zweckmäßig ist es, wenn entsprechend dem Patentanspruch 16 die ovalen Ausgestaltungen der beiden Borstenträger einander zugewandt sind. Dies hat den Vorteil, daß in dem von den einander zugewandten Borstenträgern gebildeten Überlappungsbereich eine größere Anzahl Borsten vorhanden ist. Dadurch wird die Reinigungswirkung des Bürstenteils weiter verbessert.

Bei einer weiteren vorteilhaften Ausgestaltung der Erfindung nach dem Patentanspruch 17 schließen die von jedem der beiden Borstenträger abstehenden Borsten einen Winkel zueinander ein. Damit wird erreicht, daß die Borsten jedes Borstenträgers optimal an die Form der zu reinigenden Zähne angepaßt sind. Die Borsten stehen unter verschiedenen Winkeln von dem jeweiligen Borstenträger ab, so daß sie auch unter verschiedenen Winkeln auf den Zahnflächen aufsitzen. Insbesondere die Kauflächen der Zähne werden somit durch die verschiedenen Borsten des Bürstenteils gleichmäßiger und damit besser gereinigt.

Besonders zweckmäßig ist es dabei, wenn entsprechend dem Patentanspruch 18 die einander zugewandten Borsten der beiden Borstenträger einen spitzen Winkel mit der jeweils zugehörigen Bürstenachse einschließen, und die übrigen Borsten jeweils etwa parallel zur Bürstenachse angeordnet sind.

Bei einer weiteren vorteilhaften Ausgestaltung der Erfindung nach dem Patentanspruch 19 sind die von jedem der beiden Borstenträger abstehenden Borsten unterschiedlich lang. Auch dadurch wird erreicht, daß die zu reinigenden Zahnflächen, insbesondere die zu reinigenden Rundungen und Kauflächen der Zähne, besser von den unterschiedlich langen Borsten erreicht und damit die Reinigungswirkung des erfindungsgemäßen Bürstenteils verbessert wird.

Besonders zweckmäßig ist es dabei, wenn entsprechend dem Patentanspruch 20 die Länge der Borsten mit größer werdendem Abstand von den einander zugewandten Borsten ebenfalls größer wird.

Weitere Merkmale, Vorteile und Anwendungsmöglichkeiten der Erfindung ergeben sich aus der nachfolgenden Beschreibung von Ausführungsbeispielen, die in der Zeichnung näher dargestellt sind.

Es zeigt:
- Fig. 1: eine schematische Darstellung eines Längsschnitts durch ein erstes Ausführungsbeispiel eines Bürstenteils für eine elektrische Zahnbürste entlang der Ebene A - A der Fig. 2a,
- Fig. 2a: eine schematische Darstellung eines Querschnitts durch das Bürstenteil der Fig. 1 entlang der Ebene D - D der Fig. 1,
- Fig. 2b: eine schematische Darstellung eines Schnitts durch das Bürstenteil der Fig. 1 entlang der Ebene B - B der Fig. 2a,
- Fig. 2c: eine schematische Darstellung eines Schnitts durch das Bürstenteil der Fig. 1 entlang der Ebene C - C der Fig. 2a,
- Fig. 3: eine in die Ebene geklappte schematische Darstellung des Bürstenteils der Fig. 1 aus der Richtung E der Fig. 1,
- Fig. 4: eine schematische Darstellung eines Pleuels für das Bürstenteil der Fig. 1 aus zwei orthogonalen Richtungen,
- Fig. 5a: eine in die Ebene geklappte schematische Darstellung eines zweiten Ausführungsbeispiels eines Bürstenteils für eine elektrische Zahnbürste aus einer der Richtung E der Fig. 1 entsprechenden Richtung,
- Fig. 5b: eine in die Ebene geklappte schematische Darstellung eines dritten Ausführungsbeispiels eines Bürstenteils für eine elektrische Zahnbürste aus einer der Richtung E der Fig. 1 entsprechenden Richtung,
- Fig. 6: eine schematische Darstellung eines Querschnitts durch ein viertes Ausführungsbeispiel eines Bürstenteils für eine elektrische Zahnbürste entlang einer der Ebene D - D der Fig. 1 entsprechenden Ebene,
- Fig. 7: eine in die Ebene geklappte schematische Darstellung eines fünften Ausführungsbeispiels eines Bürstenteils für eine elektrische Zahnbürste aus einer der Richtung E der Fig. 1 entsprechenden Richtung,
- Fig. 8a: eine schematische Darstellung eines Querschnitts durch ein sechstes Ausführungsbeispiel eines Bürstenteils für eine elektrische Zahnbürste entlang einer der Ebene D - D der Fig. 1 entsprechenden Ebene,
- Fig. 8b: eine schematische Darstellung eines Querschnitts durch ein siebtes Ausführungsbeispiel eines Bürstenteils für eine elektrische Zahnbürste entlang einer der Ebene D - D der Fig. 1 entsprechenden Ebene,
- Fig. 9a: eine schematische Darstellung eines Querschnitts durch ein achtes Ausführungsbeispiel eines Bürstenteils für eine elektrische Zahnbürste entlang einer der Ebene D - D der Fig. 1 entsprechenden Ebene, und
- Fig. 9b: eine schematische Darstellung eines Querschnitts durch ein neuntes Ausführungsbeispiel eines Bürstenteils für eine elektrische Zahnbürste entlang einer der Ebene D - D der Fig. 1 entsprechenden Ebene.

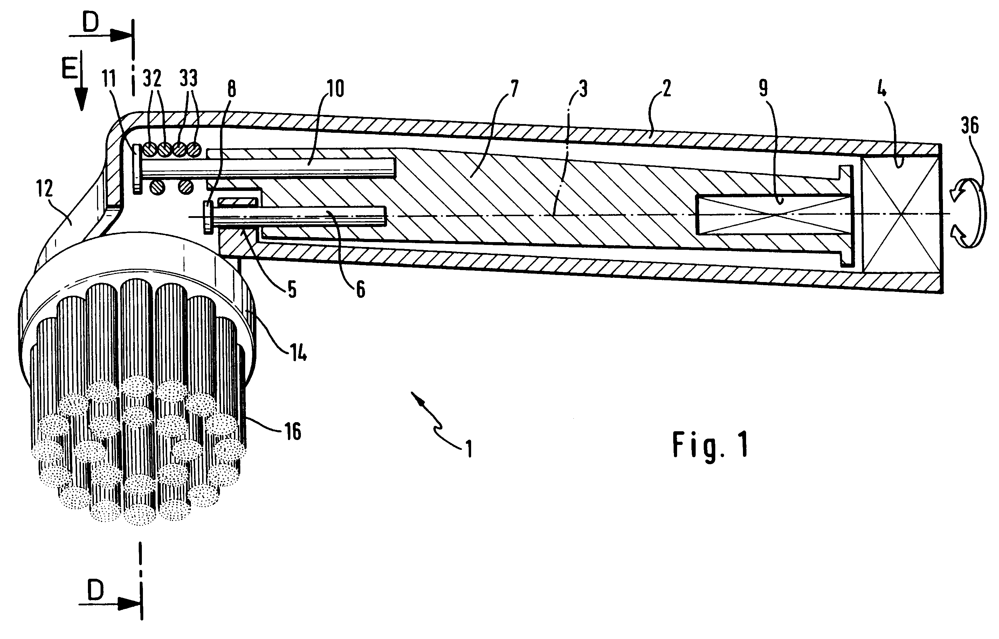

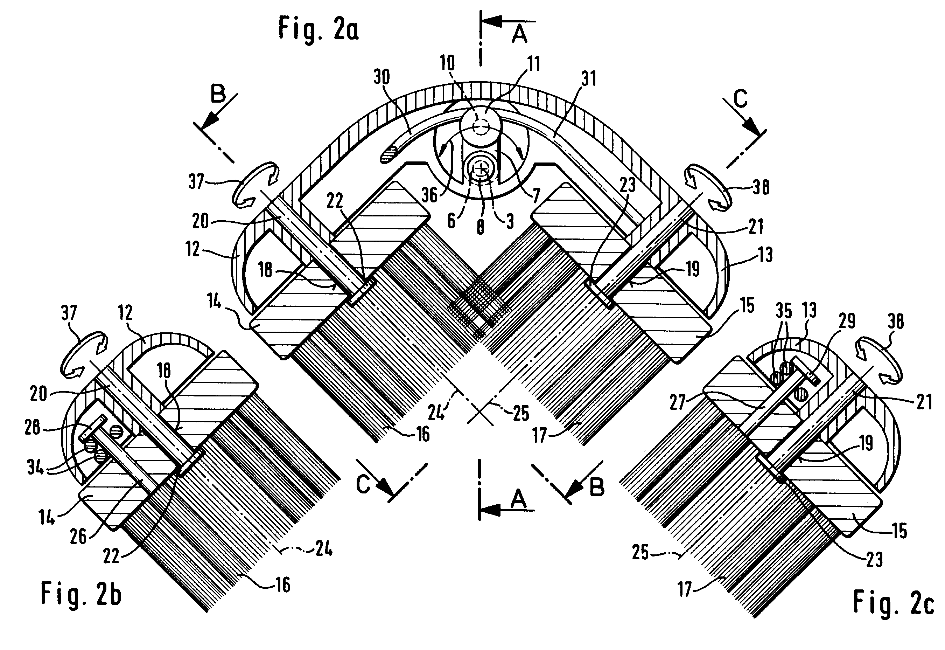

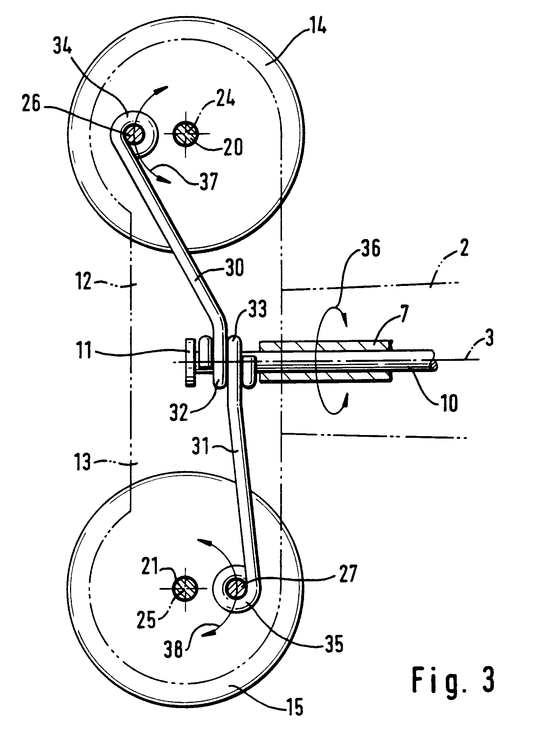

Die anhand der Fign. 1 bis 9b nachfolgend beschriebenen Bürstenteile sind geeignet zum Betrieb mit einer elektrischen Zahnbürste, wie sie in der deutschen Offenlegungsschrift DE 39 37 850 A1 offenbart ist. Die in der genannten Offenlegungsschrift erläuterte oszillierende Drehbewegung der Antriebswelle der elektrischen Zahnbürste kann jedoch auch durch eine oszillierende Längsbewegung einer Antriebsstange ersetzt werden. Es wird ausdrücklich darauf hingewiesen, daß die Erfindung auf der Grundlage beider Möglichkeiten realisierbar ist.

Die elektrische Zahnbürste nach der deutschen Offenlegungsschrift DE 39 37 850 A1 weist ein Griffteil auf, aus dem eine Antriebswelle herausragt. In dem Griffteil sind elektrische Antriebsmittel untergebracht, die die Antriebswelle im eingeschalteten Zustand in eine oszillierende Drehbewegung um ihre Längsachse versetzen. Die Antriebswelle und dasjenige Ende des Griffteils, aus dem die Antriebswelle herausragt, sind mit Außenkonturen zum Aufstecken eines Bürstenteils und zum Übertragen der erzeugten Drehbewegung versehen.

In den Fign. 1 bis 4 ist ein Bürstenteil 1 dargestellt, das auf das Griffteil und die Antriebswelle der obigen elektrischen Zahnbürste aufgesteckt werden kann. Das Bürstenteil 1 weist ein Trägerrohr 2 auf, das sich etwa in Richtung einer Längsachse 3 erstreckt. Das Trägerrohr 2 ist an seinem dem Griffteil zugewandten freien Ende mit einer Innenkontur 4 versehen, die zu der Außenkontur des Griffteils komplementär ist. Auf diese Weise kann das Bürstenteil 1 drehfest auf das Griffteil aufgesteckt werden.

An seinem dem Griffteil abgewandten Ende ist innerhalb eines nach innen ragenden Vorsprungs des Trägerrohrs 2 eine Bohrung 5 vorgesehen, in der ein Lagerstift 6 drehbar gelagert ist. Der Lagerstift 6 ist in der Längsachse 3 angeordnet. Mit einem Ende ist der Lagerstift 6 in die Stirnseite einer Welle 7 fest eingepreßt. Das andere Ende des Lagerstifts 6 ist auf der der Welle 7 abgewandten Seite der Bohrung 5 mit einer Scheibe 8 versehen. Die Welle 7 ist somit in der Längsachse 3 des Trägerrohrs 2 angeordnet und wird durch die Scheibe 8 an einem Verschieben in Richtung der Längsachse 3 gehindert.

Die Welle 7 erstreckt sich über nahezu die gesamte Länge des Trägerrohrs 2 und ist vorzugsweise aus Kunststoff hergestellt. Die Welle 7 besitzt an ihrem dem Griffteil zugewandten freien Ende eine Innenkontur 9, die zu der Außenkontur der aus dem Griffteil herausragenden Antriebswelle komplementär ist. Auf diese Weise kann die Antriebswelle drehfest mit der Welle 7 verbunden werden.

Bei den Innen- und Außenkonturen 4, 9 kann es sich - im Querschnitt gesehen - um quadratische, sternförmige oder ähnliche Konturen handeln, die derart aneinander angepaßt sind, daß einerseits ein einfaches Aufstecken und Abziehen des Bürstenteils 1 vom Griffteil durch einen Benutzer möglich ist, daß aber andererseits auch der sichere Sitz des Bürstenteils 1 auf dem Griffteil gewährleistet ist.

Mit Abstand zur Längsachse 3 ist ein Stift 10 in die Stirnseite der Welle 7 fest eingepreßt. Der Stift 10 ist parallel zur Längsachse 3 und damit zum Lagerstift 6 angeordnet und ragt hinsichtlich seiner Länge über den Lagerstift 6 hinaus. An seinem freien Ende ist der Stift 10 mit einer Scheibe 11 abgeschlossen.

Im Bereich des Stifts 10 geht das Trägerrohr 2 in zwei Arme 12, 13 über, die etwa rechtwinklig vom Trägerrohr 2 abstehen und etwa einen rechten Winkel miteinander einschließen. An den freien Enden der Arme 12, 13 ist jeweils ein Borstenträger 14, 15 drehbar gelagert. Die beiden Borstenträger 14, 15 sind scheibenförmig ausgestaltet. Von den den Armen 12, 13 abgewandten Seiten der Borstenträger 14, 15 stehen jeweils Borsten 16, 17 in etwa einem rechten Winkel zu den Borstenträgern 14, 15 ab.

Zur drehbaren Lagerung ist jeder der beiden Borstenträger 14, 15 etwa mittig mit einer Bohrung 18, 19 versehen, die etwa parallel zu den Borsten 16, 17 und damit etwa quer zu den Borstenträgern 14, 15 angeordnet sind. In den beiden Armen 12, 13 ist jeweils ein Lagerstift 20, 21 fest eingepreßt. Diese beiden Lagerstifte 20, 21 sind jeweils in einem rechten Winkel zu dem zugehörigen Arm 12, 13 angeordnet und schließen etwa einen rechten Winkel miteinander ein. Die beiden Lagerstifte 20, 21 sind jeweils durch die Bohrung 18, 19 des zugehörigen Borstenträgers 14, 15 hindurchgesteckt. Das freie Ende der beiden Lagerstifte 20, 21 ist jeweils mit einer Scheibe 22, 23 abgeschlossen. Die beiden Borstenträger 14, 15 sind damit um die von den beiden Lagerstiften 20, 21 gebildeten Bürstenachsen 24, 25 drehbar gelagert.

Mit Abstand zu den beiden Bürstenachsen 24, 25 ist in jeden der beiden Borstenträger 14, 15 jeweils ein Stift 26, 27 fest eingepreßt. Die Stifte 26, 27 sind etwa parallel zu den jeweils zugehörigen Bürstenachsen 24, 25 angeordnet und stehen jeweils auf der den Borsten 16, 17 abgewandten Seite über die Borstenträger 14, 15 über. Die freien Enden der beiden Stifte 26, 27 sind mit Scheiben 28, 29 abgeschlossen.

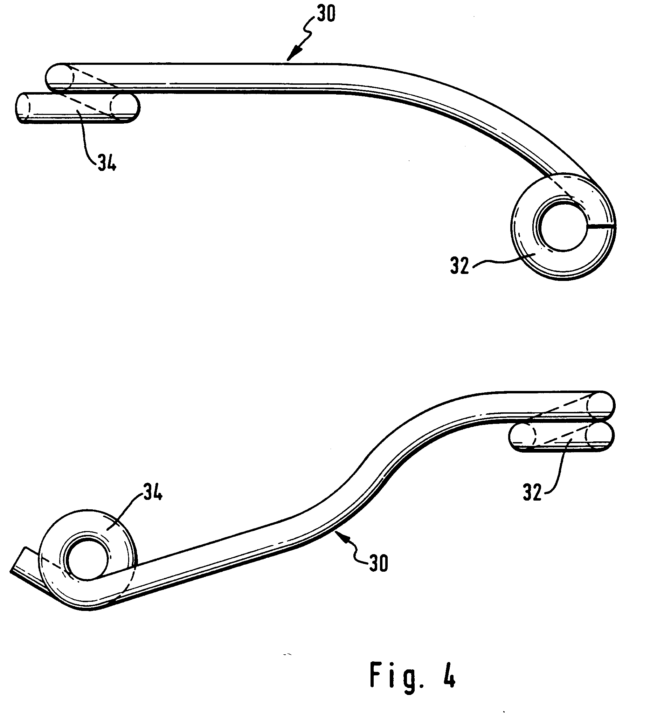

Der in die Welle 7 eingesteckte Stift 10 und die in die Borstenträger 14, 15 eingesteckten Stifte 26, 27 sind mittels zweier Pleuel 30, 31 miteinander gekoppelt. Die Pleuel 30, 31 sind aus gebogenem Rundmetall hergestellt. Beispielhaft kann insbesondere die räumliche Gestalt des Pleuels 30 vorzugsweise der Fig. 4 genauer entnommen werden.

Jedes der Pleuel 30, 31 weist an seinen freien Enden jeweils eine Öse 32, 33, 34, 35 auf. Mit diesen Ösen 32, 33, 34, 35 sind die Pleuel 30, 31 auf die Stifte 10, 26, 27 aufgesteckt. Dabei sind auf den aus der Welle 7 herausragenden Stift 10 die Ösen 32, 33 beider Pleuel 30, 31 aufgesteckt, während der von dem Borstenträger 14 abstehende Stift 26 durch die Öse 34 des Pleuels 30 und der von dem Borstenträger 15 abstehende Stift 27 durch die Öse 35 des Pleuels 31 hindurchgesteckt ist. Die Stifte 10, 26, 27 und die Ösen 32, 33, 34, 35 weisen dabei derart viel Spiel zueinander auf, daß sie sich räumlich zueinander bewegen können.

Bei dem anhand der Fign. 1 bis 4 beschriebenen Bürstenteil 1 führt die aus dem Griffteil der elektrischen Zahnbürste herausragende Antriebswelle eine oszillierende Drehbewegung aus. Wird die Welle 7 bei aufgestecktem Bürstenteil 1 und im eingeschalteten Zustand der elektrischen Zahnbürste nunmehr ebenfalls in eine oszillierende Drehbewegung 36 um die Längsachse 3 versetzt, so führt der Stift 10 eine oszillierende Schwenkbewegung auf einem Kreisbogen um die Längsachse 3 aus. Diese Schwenkbewegung wird mittels der beiden Pleuel 30, 31 auf die Stifte 26, 27 übertragen, die somit ihrerseits jeweils eine oszillierende Schwenkbewegung auf einem Kreisbogen um die jeweils zugehörige Bürstenachse 24, 25 ausführen. Diese Schwenkbewegung stellt gleichzeitig eine oszillierende Drehbewegung 37, 38 der Borstenträger 14, 15 um die Bürstenachsen 24, 25 dar. Dies hat zur Folge, daß auch die freien Enden der Borsten 16, 17 auf den zu reinigenden Zahnflächen die oszillierende Drehbewegung 37, 38 ausführen.

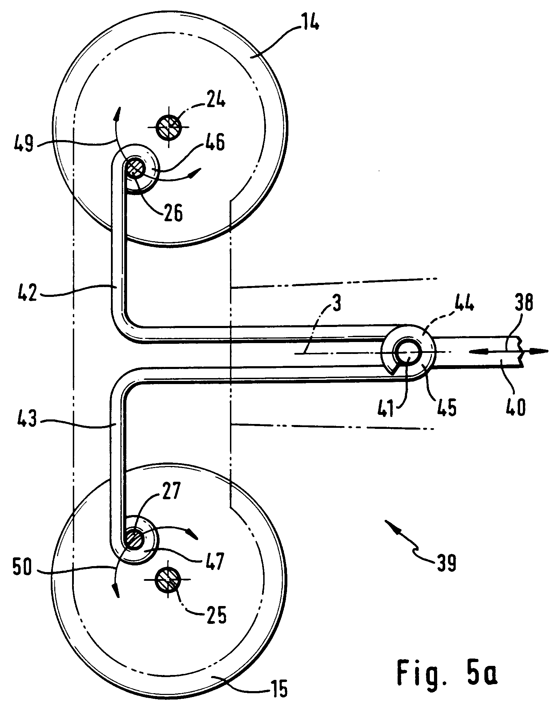

In der Fig. 5a ist ein Bürstenteil 39 dargestellt, das eine Stange 40 aufweist, die in Richtung der Längsachse 3 angeordnet und verschiebbar ist. An ihrem freien Ende ist ein Stift 41 fest in die Stange 40 eingepreßt. Der Stift 41 ist dabei etwa quer zur Längsachse 3 angeordnet. Der Stift 41 und die beiden in die Borstenträger 14, 15 eingepreßten Stifte 26, 27 sind mittels zweier Pleuel 42, 43 miteinander gekoppelt. Die beiden Pleuel 42, 43 weisen an ihren freien Enden jeweils zwei Ösen 44, 45, 46, 47 auf, die auf die Stifte 41, 26, 27 aufgesteckt sind. Dabei sind die Ösen 44, 45 der beiden Pleuel 42, 43 auf den Stift 41 aufgesteckt, während der Stift 26 durch die Öse 46 des Pleuels 42 und der Stift 27 durch die Öse 47 des Pleuels 43 hindurchgesteckt ist. Durch die gebogene Form der Pleuel 42, 43 wird erreicht, daß das vordere Ende des Trägerrohrs 2 und die Arme 12, 13 eine schlanke Form erhalten.

Bei dem anhand der Fig. 5a erläuterten Bürstenteil 39 führt die aus dem Griffteil der elektrischen Zahnbürste herausragende Antriebsstange eine oszillierende Längsbewegung aus. Wird die Stange 40 dadurch ebenfalls in eine oszillierende Längsbewegung 48 in Richtung der Längsachse 3 versetzt, so führt der Stift 41 dieselbe Längsbewegung 48 aus. Mit Hilfe der Pleuel 42, 43 wird diese Längsbewegung 48 auf die Stifte 26, 27 übertragen, wo sie zu einer Schwenkbewegung der Stifte 26, 27 um die Bürstenachsen 24, 25 führt. Diese Schwenkbewegung stellt gleichzeitig eine Drehbewegung 49, 50 der Borstenträger 14, 15 um die Bürstenachse 24, 25 dar. Dies hat zur Folge, daß auch die freien Enden der Borsten 16, 17 auf den zu reinigenden Zahnflächen die oszillierende Drehbewegung 49, 50 ausführen.

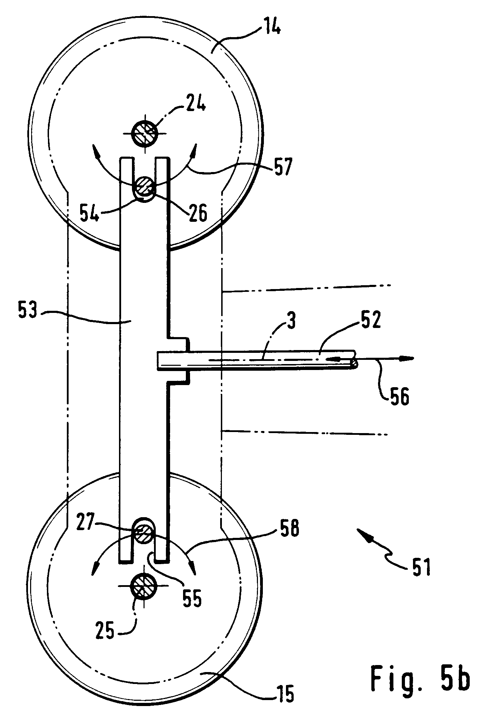

In der Fig. 5b ist ein Bürstenteil 51 dargestellt, das eine Stange 52 aufweist, die in Richtung der Längsachse 3 angeordnet und verschiebbar ist. An ihrem freien Ende ist die Stange 52 fest mit einer Querstange 53 verbunden. Die Querstange 53 ist etwa rechtwinklig zur Längsachse 3 angeordnet und reicht bis in den Bereich der beiden Borstenträger 14, 15. An jedem ihrer freien Enden weist die Querstange einen Schlitz 54, 55 auf, durch den die von den Borstenträgern abstehenden Stifte 26, 27 abstehen. In den Schlitzen 54, 55 können sich die Stifte 26, 27 hin- und herbewegen.

Bei dem anhand der Fig. 5b erläuterten Bürstenteil 51 führt die aus dem Griffteil der elektrischen Zahnbürste herausragende Antriebsstange eine oszillierende Längsbewegung aus. Wird die Stange 52 dadurch ebenfalls in eine oszillierende Längsbewegung 56 in Richtung der Längsachse 3 versetzt, so führt die Querstange 53 dieselbe Längsbewegung 56 aus. Dies hat zur Folge, daß die durch die Schlitze 54, 55 hindurchragenden Stifte 26, 27 von der Querstange 53 mitgenommen werden. Die Stifte 26, 27 führen dadurch eine oszillierende Schwenkbewegung auf einem Kreisbogen um die jeweils zugehörige Bürstenachse 24, 25 aus. Diese Schwenkbewegung stellt gleichzeitig eine oszillierende Drehbewegung 57, 58 der Borstenträger 14, 15 um die Bürstenachsen 24, 25 dar. Dies hat zur Folge, daß auch die freien Enden der Borsten 16, 17 auf den zu reinigenden Zahnflächen die oszillierende Drehbewegung 57, 58 ausführen.

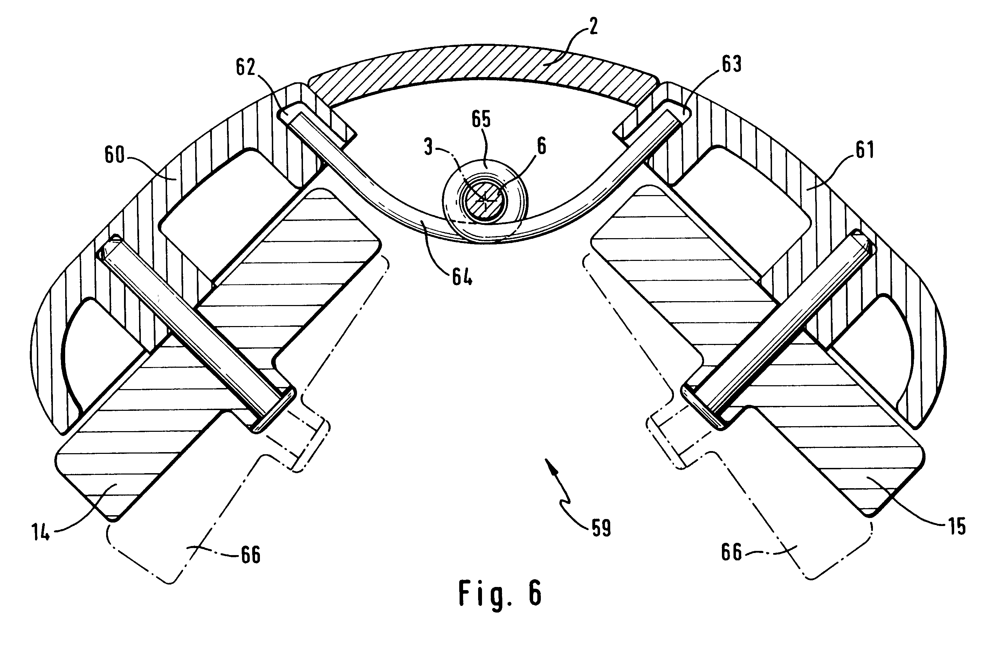

Bei den nachfolgend anhand der Fign. 6 bis 9b beschriebenen Bürstenteilen kann die Welle entweder eine oszillierende Drehbewegung oder die Stange eine oszillierende Längsbewegung ausführen, wie dies anhand der Fign. 1 bis 4 und anhand der Fign. 5a und 5b bereits erläutert worden ist. Es wird ausdrücklich darauf hingewiesen, daß die nachfolgenden Erläuterungen bei beiden Möglichkeiten realisierbar sind.

In der Fig. 6 ist ein Bürstenteil 59 gezeigt, das zwei Arme 60, 61 aufweist, die nicht mit dem Trägerrohr 2 und auch nicht miteinander verbunden sind. Die beiden Arme 60, 61 stehen etwa rechtwinklig von dem Trägerrohr 2 ab und schließen etwa einen rechten Winkel miteinander ein. Jeder der beiden Arme 60, 61 ist auf dem Lagerstift 6 schwenkbar gelagert.

In dem dem Trägerrohr 2 zugewandten Bereich ist in jedem der beiden Arme 60, 61 ein Loch 62, 63 vorgesehen, das zu den an den Armen 60, 61 gehaltenen Borstenträgern 14, 15 hin geöffnet ist. Eine metallische Feder 64 ist mit ihren freien Enden in die beiden Löcher 62, 63 eingesteckt. Etwa in ihrer Mitte weist die Feder 64 eine Öse 65 auf, durch die der Lagerstift 6 hindurchgesteckt ist.

Die beiden Arme 60, 61 sind somit um den Lagerstift 6 und damit um die Längsachse 3 schwenkbar gelagert. Die Feder 64 übt dabei eine Kraft auf die beiden Arme 60, 61 aus, die die beiden Arme 60, 61 in Richtung zu einer Ausgangslage 66 zusammendrückt.

Das in der Fig. 6 gezeigte Bürstenteil 59 weist Anschläge auf, die den Schwenkbereich der beiden Arme 60, 61 in minimaler und maximaler Richtung begrenzen. Der minimale Winkel, den die beiden Arme 60, 61 zueinander einnehmen können, beträgt vorzugsweise etwa 80 Grad. Der maximale Winkel, den die beiden Arme 60, 61 zueinander einnehmen können, beträgt vorzugsweise 90 bis etwa 100 Grad. Die Feder 64 ist derart vorgespannt, daß sie die beiden Arme 60, 61 in Richtung des minimalen Winkels zusammendrückt.

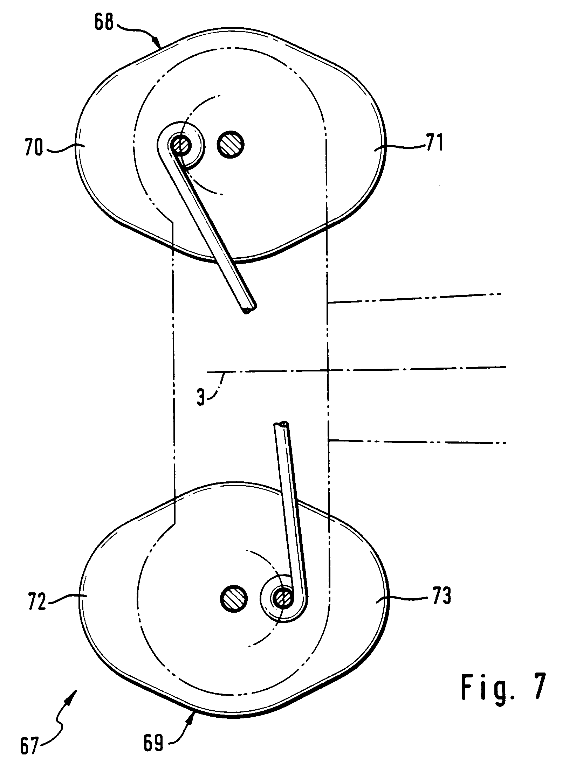

In der Fig. 7 ist ein Bürstenteil 67 dargestellt, das zwei Borstenträger 68, 69 aufweist, die jeweils oval ausgestaltet sind. Jeder der beiden Borstenträger 68, 69 weist in Richtung der Längsachse 3 zwei ovale Ausbuchtungen 70, 71, 72, 73 auf. Beide Borstenträger 68, 69 besitzen somit einen größten und einen kleinsten Durchmesser, die jeweils etwa parallel zueinander angeordnet sind.

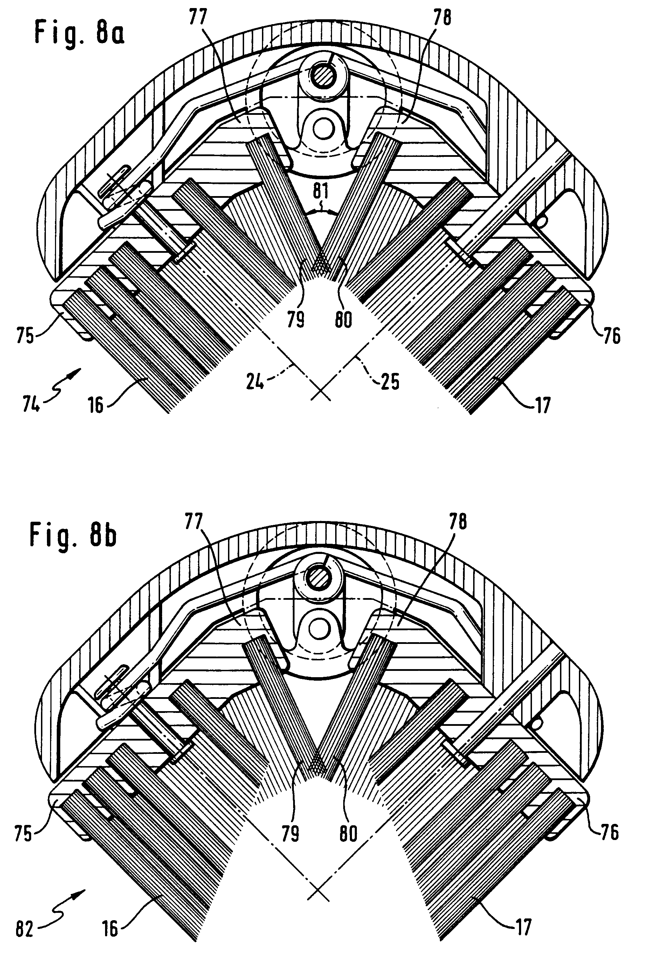

In der Fig. 8a ist ein Bürstenteil 74 gezeigt, das zwei Borstenträger 75, 76 aufweist, die jeweils eine ovale Ausbuchtung 77, 78 aufweisen. Die Ausbuchtungen 77, 78 der beiden Borstenträger 75, 76 sind einander zugewandt. Im Bereich der beiden Ausbuchtungen 77, 78 sind die beiden Borstenträger 75, 76 geringfügig abgewinkelt. Im nicht abgewinkelten Bereich der Borstenträger 75, 76 sind die Borsten 16, 17 etwa parallel zur Bürstenachse 24, 25 angeordnet. Im abgewinkelten Bereich der Borstenträger 75, 76 sind hingegen jeweils Borsten 79, 80 vorgesehen, die einen Winkel 81 zueinander aufweisen, der kleiner ist als der Winkel, den die Bürstenachsen 24, 25 einschließen.

In der Fig. 8b ist ein Bürstenteil 82 dargestellt das im Unterschied zu dem anhand der Fig. 8a bereits erläuterten Bürstenteil 74 in dem nicht-abgewinkelten Bereich der Borstenträger 75, 76 unterschiedlich lange Borsten 16, 17 aufweist. Die Länge der Borsten 16, 17 ist dabei auf der den einander zugewandten Ausbuchtungen 77, 78 der Borstenträger 75, 76 abgewandten Seite am größten und auf der den Ausbuchtungen 77, 78 zugewandten Seite der Borstenträger 75, 76 am kleinsten. Der Veränderung der Länge der Borsten 16, 17 ist etwa linear. Die Länge der Borsten 79, 80 im abgewinkelten Bereich der Borstenträger 75, 76 liegt etwa zwischen der kleinsten und der größten Länge der Borsten 16, 17 des nicht-abgewinkelten Bereichs der Borstenträger 75, 76.

In der Fig. 9a ist ein Bürstenteil 83 dargestellt, bei dem die von den scheibenförmigen Borstenträgern 14, 15 abstehenden Borsten 16, 17 nur im Bereich eines äußeren Kreisringes gleich lang sind. Im Inneren des Kreisringes sind Borsten 84, 85 angeordnet, die verschieden lang sind. Die Länge dieser Borsten 84, 85 vergrößert sich ausgehend von einem Überlappungsbereich 86 nach außen. Der Überlappungsbereich 86 ist dabei derjenige Bereich, in dem die Borsten 16, 17 der beiden Borstenträger 14, 15 einander gegenüberstehen und teilweise ineinander eingreifen. Die Veränderung der Länge der Borsten 84, 85 von innen nach außen ist etwa linear.

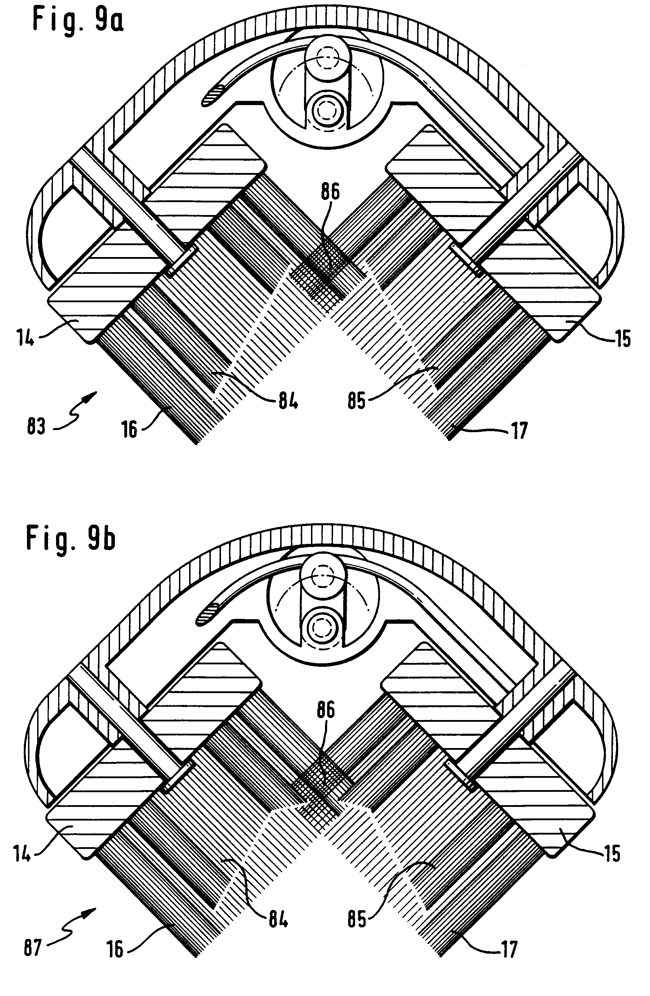

In der Fig. 9b ist ein Bürstenteil 87 gezeigt, bei dem im Unterschied zu dem anhand der Fig. 9a bereits erläuterten Bürstenteil 82 die Länge der Borsten 84, 85 im Innenraum des genannten Kreisrings ausgehend von dem Überlappungsbereich 86 zuerst kleiner und danach wieder größer wird.

## Patentansprüche

1. Bürstenteil (1, 39, 51, 59, 67, 74, 82, 83, 87) für eine elektrische Zahnbürste, mit einem Trägerrohr (2), in dem ein in Richtung einer Längsachse (3) angeordneter Antrieb, insbesondere eine Welle (7) oder Stange (40, 52) untergebracht ist, mit wenigstens einem ersten und einem zweiten Borstenträger (14, 15, 68, 69, 75, 76), die um wenigstens eine erste und eine zweite Bürstenachse (24, 25) drehbar gelagert sind, und mit Mitteln (30, 31, 42, 43, 53) zur Kopplung des Antriebes und der Borstenträger (14, 15, 68, 69, 75, 76) derart, daß eine Bewegung (36, 48, 56) des Antriebes eine Drehbewegung (37, 38, 49, 50, 57, 58) der Borstenträger (14, 15, 68, 69, 75, 76) um die Bürstenachsen (24, 25) bewirkt, dadurch gekennzeichnet, daß die Bürstenachsen (24, 25) etwa einen rechten Winkel zueinander einschließen.

2. Bürstenteil nach Patentanspruch 1, dadurch gekennzeichnet, daß die Welle (7) um die Längsachse (3) drehbar gelagert und oszillierend antreibbar ist, wobei die Welle (7) und die beiden Borstenträger (14, 15) mittels eines ersten und eines zweiten Pleuels (30, 31) miteinander gekoppelt sind.

3. Bürstenteil nach Ansprüch 2, dadurch gekennzeichnet, daß jedes der beiden Pleuel (30, 31) außerhalb der Längsachse (3) mit der Welle (7) und außerhalb der Bürstenachse (24, 25) mit dem zugehörigen Borstenträger (14, 15) verbunden ist.

4. Bürstenteil nach einem der Ansprüch 2 oder 3, dadurch gekennzeichnet, daß von der Welle (7) ein Stift (10) etwa parallel zur Längsachse (3) und von den beiden Borstenträgern (14, 15) jeweils ein Stift (26, 27) etwa parallel zu den beiden Bürstenachsen (24, 25) absteht, und daß die beiden Pleuel (30, 31) jeweils zwei Ösen (32, 33, 34, 35) aufweisen, durch die die Stifte (10, 26, 27) hindurchgesteckt sind.

5. Bürstenteil nach einem der vorhergehenden Patentansprüche, dadurch gekennzeichnet, daß die Stange (40) in Richtung der Längsachse (3) verschiebbar gelagert und oszillierend antreibbar ist, und daß die Stange (40) und die beiden Borstenträger (14, 15) mittels eines dritten und eines vierten Pleuels (42, 43) miteinander gekoppelt sind.

6. Bürstenteil nach Anspruch 5, dadurch gekennzeichnet, daß jedes der beiden dritten und vierten Pleuel (42, 43) mit der Stange (40) und außerhalb der Bürstenachse (24, 25) mit dem zugehörigen Borstenträger (14, 15) verbunden ist.

7. Bürstenteil nach einem der Patentansprüche 5 oder 6, dadurch gekennzeichnet, daß von der Stange (40) ein Stift (41) etwa quer zur Längsachse (3) und von den beiden Borstenträgern (14, 15) jeweils ein Stift (26, 27) etwa parallel zu den beiden Bürstenachsen (24, 25) absteht, und daß die beiden dritten und vierten Pleuel (42, 43) jeweils zwei Ösen (44, 45, 46, 47) aufweisen, durch die die Stifte (40, 26, 27) hindurchgesteckt sind.

8. Bürstenteil nach einem der Patentansprüche 4 oder 7, dadurch gekennzeichnet, daß die Ösen (32, 33, 34, 35, 44, 45, 46, 47) und die Stifte (10, 40, 26, 27) ein für eine räumliche Bewegung ausreichendes Spiel zueinander aufweisen.

9. Bürstenteil nach einem der Patentansprüche 2-8, dadurch gekennzeichnet, daß die beiden Pleuel (30, 31, 42, 43) aus gebogenem Rundmetall bestehen.

10. Bürstenteil nach einem der vorhergehenden Patentansprüche, dadurch gekennzeichnet, daß die Stange (52) in Richtung der Längsachse (3) verschiebbar gelagert und oszillierend antreibbar ist, und daß die Stange (52) und die beiden Borstenträger (14, 15) vorzugsweise mittels einer Querstange (53) miteinander gekoppelt sind.

11. Bürstenteil nach Anspruch 10, dadurch gekennzeichnet, daß die Stange (52) fest mit der Querstange (53) verbunden ist und von den beiden Borstenträgern (14, 15) jeweils ein Stift (26, 27) etwa parallel zu den beiden Bürstenachsen (24, 25) absteht, wobei vorzugsweise die Querstange (53) an ihren freien Enden mit Schlitzen (54, 55) versehen ist, durch die die Stifte (26, 27) hindurchgesteckt sind.

12. Bürstenteil nach einem der vorhergehenden Patentansprüche, dadurch gekennzeichnet, daß die beiden Borstenträger (14, 15) an Armen (60, 61) befestigt sind, die um eine etwa parallel zur Längsachse (3) angeordnete Schwenkachse oder um die Längsachse (3) selbst schwenkbar gelagert sind.

13. Bürstenteil nach Anspruch 12, dadurch gekennzeichnet, daß eine Feder (64) vorgesehen ist, die mittelbar oder unmittelbar eine Kraft auf die beiden Borstentäger (14, 15) in Richtung einer Ausgangslage (66) ausübt.

14. Bürstenteil nach einem der Ansprüche 12 oder 13, dadurch gekennzeichnet, daß die Welle (7) und die beiden Arme (60, 61) auf demselben Lagerstift (6) gelagert sind.

15. Bürstenteil nach einem der Patentansprüche 1 bis 14, dadurch gekennzeichnet, daß die Borstenträger (68, 69, 75, 76) in mindestens einer Richtung eine ovale Ausbuchtung (70, 71, 72, 73, 77, 78) aufweisen.

16. Bürstenteil nach Patentanspruch 15, dadurch gekennzeichnet, daß die ovalen Ausbuchtungen (77, 78) der beiden Borstenträger (75, 76) einander zugewandt sind.

17. Bürstenteil nach einem der Patentansprüche 1 bis 16, dadurch gekennzeichnet, daß ein Teil der von jedem der beiden Borstenträger (75, 76) abstehenden Borsten (16, 17, 79, 80) einen Winkel (81) zueinander einschließt.

18. Bürstenteil nach Patentanspruch 17, dadurch gekennzeichnet, daß die einander zugewandten Borsten (79, 80) der beiden Borstenträger (75, 76) einen spitzen Winkel (81) zueinander einschließen, und daß die übrigen Borsten (16, 17) jeweils etwa parallel zur Bürstenachse (24, 25) angeordnet sind.

19. Bürstenteil nach einem der Patentansprüche 1 bis 18, dadurch gekennzeichnet, daß die von jedem der beiden Borstenträger (14, 15, 75, 76) abstehenden Borsten (16, 17, 84, 85) unterschiedlich lang sind.

20. Bürstenteil nach Patentanspruch 19, dadurch gekennzeichnet, daß die Länge der Borsten (16, 17, 84, 85) mit größer werdendem Abstand von den einander zugewandten Borsten (16, 17, 79, 80) ebenfalls größer wird.

## Claims

1. A brush section (1, 39, 51, 59, 67, 74, 82, 83, 87) for an electric toothbrush, with a mounting tube (2) in which a drive means arranged in the direction of a longitudinal axis (3), in particular a shaft (7) or a rod (40, 52) is received, with at least a first and a second bristle carrier (14, 15, 68, 69, 75, 76) mounted for rotation about at least a first and a second brush axis (24, 25), and with means (30, 31, 42, 43, 53) to effect coupling engagement of the drive means with the bristle carriers (14, 15, 68, 69, 75, 76), such that a motion (36, 48, 56) of the drive means effects a rotary motion (37, 38, 49, 50, 57, 58) of the bristle carriers (14, 15, 68, 69, 75, 76) about the brush axes (24, 25), **characterized in that** the brush axes (24, 25) define between them an approximately right angle.

2. The brush section as claimed in patent claim 1, **characterized in that** the shaft (7) is mounted for rotation about the longitudinal axis (3) and is adapted to be driven for oscillation, with the shaft (7) and the two bristle carriers (14, 15) being in coupling engagement with one another by means of a first and a second connecting rod (30, 31).

3. The brush section as claimed in claim 2, **characterized in that** each of the two connecting rods (30, 31) is connected with the shaft (7) at a location outside the longitudinal axis (3) and with the associated bristle carrier (14, 15) at a location outside the brush axis (24, 25).

4. The brush section as claimed in any one of the claims 2 or 3, **characterized in that** a pin (10) extends from the shaft (7) approximately parallel to the longitudinal axis (3), and a pin (26, 27) extends from each of the two bristle carriers (14, 15) approximately parallel to the two brush axes (24, 25), and that the two connecting rods (30, 31) include each two eyes (32, 33, 34, 35) through which the pins (10, 26, 27) are passed.

5. The brush section as claimed in any one of the preceding patent claims, **characterized in that** the rod (40) is displaceable in the direction of the longitudinal axis (3) and is adapted to be driven for oscillation, and that the rod (40) and the two bristle carriers (14, 15) are in coupling engagement with each other by means of a third and a fourth connecting rod (42, 43).

6. The brush section as claimed in claim 5, **characterized in that** each of the two third and fourth connecting rods (42, 43) is connected with the rod (40) at one end, and with the associated bristle carrier (14, 15) at a location outside the brush axis (24, 25) at the other end.

7. The brush section as claimed in any one of the patent claims 5 or 6**, characterized in that** a pin (41) extends from the rod (40) approximately transversely to the longitudinal axis (3), and a pin (26, 27) each extends from the two bristle carriers (14, 15) approximately parallel to the two brush axes (24, 25), and that the two third and fourth connecting rods (42, 43) include each two eyes (44, 45, 46, 47) through which the pins (40, 26, 27) are passed.

8. The brush section as claimed in any one of the patent claims 4 or 7, **characterized in that** the eyes (32, 33, 34, 35, 44, 45, 46, 47) and the pins (10, 40, 26, 27) have sufficient relative clearance for spatial movement.

9. The brush section as claimed in any one of the patent claims 2 to 8, **characterized in that** the two connecting rods (30, 31, 42, 43) are fabricated from a bent piece of round metal.

10. The brush section as claimed in any one of the preceding patent claims, **characterized in that** the rod (52) is displaceable in the direction of the longitudinal axis (3) and adapted to be driven for oscillation, and that the rod (52) and the two bristle carriers (14, 15) are in coupling engagement with each other preferably by means of a transverse rod (53).

11. The brush section as claimed in claim 10, **characterized in that** the rod (52) is fixedly connected with the transverse rod (53), and that respective pins (26, 27) extend from the two bristle carriers (14, 15) approximately parallel to the two brush axes (24, 25), the transverse rod (53) preferably having at its free ends slots (54, 55) through which the pins (26, 27) are passed.

12. The brush section as claimed in any one of the preceding patent claims, **characterized in that** the two bristle carriers (14, 15) are affixed to arms (60, 61) arranged so as to be pivotal about a pivot axis disposed approximately parallel to the longitudinal axis (3) or about the longitudinal axis (3) itself.

13. The brush section as claimed in claim 12, **characterized in that** a spring (64) is provided exerting directly or indirectly a force on the two bristle carriers (14, 15) in the direction of an initial position (66).

14. The brush section as claimed in any one of the claims 12 or 13, **characterized in that** the shaft (7) and the two arms (60, 61) are mounted on the same bearing pin (6).

15. The brush section as claimed in any one of the patent claims 1 to 14, **characterized in that** the bristle carriers (68, 69, 75, 76) have an oval bulge (70, 71, 72, 73, 77, 78) in at least one direction.

16. The brush section as claimed in patent claim 15, **characterized in that** the oval bulges (77, 78) of the two bristle carriers (75, 76) are arranged so as to be facing each other.

17. The brush section as claimed in any one of the patent claims 1 to 16, **characterized in that** portions of the bristles (16, 17, 79, 80) extending from each of the two bristle carriers (75, 76) define between them an included angle (81).

18. The brush section as claimed in patent claim 17, **characterized in that** the facing bristles (79, 80) of the two bristle carriers (75, 76) define between them an acute angle (81), and that the remaining bristles (16, 17) are aligned approximately parallel to their respective brush axes (24, 25).

19. The brush section as claimed in any one of the patent claims 1 to 18, **characterized in that** the bristles (16, 17, 84, 85) extending from each of the two bristle carriers (14, 15, 75, 76) differ in length.

20. The brush section as claimed in patent claim 19, **characterized in that** the length of the bristles (16, 17, 84, 85) increases progressively as the relative distance of facing bristles (16, 17, 79, 80) becomes greater.

## Revendications

1. Elément de brossage (1, 39, 51, 59, 67, 74, 82, 83, 87) pour une brosse à dents électrique, comportant un tube porteur (2) dans lequel est logé un entraînement agencé dans la direction d'un axe longitudinal (3), en particulier un arbre (7) ou une tige (40, 52), comportant au moins un premier et un second supports de poils (14, 15, 68, 69, 75, 76) qui sont montés de façon à pouvoir tourner autour d'au moins un premier et un second axes de brosses (24, 25), et comportant des moyens (30, 31, 42, 43, 53) pour l'accouplement de l'entraînement et des supports de poils (14, 15, 68, 69, 75, 76) de façon à ce qu'un mouvement (36, 48, 56) de l'entraînement provoque un mouvement de rotation (37, 38, 49, 50, 57, 58) des supports de poils (14, 15, 68, 69, 75, 76) autour des axes de brosses (24, 25), caractérisé en ce que les axes de brosses (24, 25) forment approximativement un angle droit l'un par rapport à l'autre.

2. Elément de brossage suivant la revendication 1, caractérisé en ce que l'arbre (7) est monté de façon à pouvoir tourner autour de l'axe longitudinal (3) et peut être entraîné en oscillation, l'arbre (7) et les deux supports de poils (14, 15) étant accouplés l'un à l'autre au moyen d'une première et d'une seconde bielle (30, 31).

3. Elément de brossage suivant la revendication 2, caractérisé en ce que chacune des deux bielles (30, 31) est reliée en dehors de l'axe longitudinal (3) à l'arbre (7) et en dehors de l'axe de brosse (24, 25) avec le support de poils (14, 15) correspondant.

4. Elément de brossage suivant l'une des revendications 2 ou 3, caractérisé en ce que, de l'arbre (7), une broche (10) fait saillie approximativement parallèlement à l'axe longitudinal (3) et, des deux supports de poils (14, 15), chaque fois une broche (26, 27) fait saillie approximativement parallélement aux deux axes de brosses (24, 25) et en ce que les deux bielles (30, 31) présentent chacune deux oeillets (32, 33, 34, 35) à travers lesquels sont passées les broches (10, 26, 27).

5. Elément de brossage suivant l'une des revendications précédentes, caractérisé en ce que la tige (40) est montée de façon mobile dans la direction de l'axe longitudinal (3) et peut être entraînée en oscillation, et en ce que la tige (40) et les deux supports de poils (14, 15) sont accouplés l'un à l'autre au moyen d'une troisième et d'une quatrième belle (42, 43).

6. Elément de brossage suivant la revendication 5, caractérisé en ce que chacune des deux troisième et quatrième bielles (42, 43) est reliée à la tige (40) et, en en dehors de l'axe de brosse (24, 25), au support de poils (14, 15) correspondant.

7. Elément de brossage suivant l'une des revendications 5 et 6, caractérisé en ce que, de la tige (40), une broche (41) fait saillie approximativement transversalement à l'axe longitudinal (3) et, des deux supports de poils (14, 15), une broche (26, 27) fait chaque fois saillie approximativement parallèlement au deux axes de brosses (24, 25), et en ce que les deux troisième, quatrième bielles (42, 43) présentent chaque fois deux oeillets (44, 45, 46, 47) à travers lesquels passent les broches (40, 26, 27).

8. Elément de brossage suivant l'une des revendications 4 et 7, caractérisé en ce que les oeillets (32, 33, 34, 35, 44, 45, 46, 47) et les boches (10, 40, 26, 27) présentent l'un par rapport à l'autre un jeu suffisant pour un mouvement dans l'espace.

9. Elément de brossage suivant l'une des revendications 2 à 8, caractérisé en ce que les deux bielles (30, 31, 42, 43) sont constituées de métal rond courbé.

10. Elément de brossage suivant l'une des revendications précédentes, caractérisé en ce que la tige (52) est montée de façon mobile dans la direction de l'axe longitudinal (3) et peut être entraînée en oscillation et en ce que la tige (52) et les deux supports de poils (14, 15) sont accouplés l'un à l'autre de préférence au moyen d'une tige transversale (53).

11. Elément de brossage suivant la revendication 10, caractérisé en ce que la tige (52) est reliée fixement à la tige transversale (53) et en ce que, des deux supports de poils (14, 15), une broche (26, 27) respective fait saillie approximativement parallèlement aux deux axes de brosses (24, 25), la tige transversale (53) étant munie de préférence, à ses extrémités libres, d'entailles (54, 55) à travers lesquelles sont passées les broches (26, 27).

12. Elément de brossage suivant l'une des revendications précédentes, caractérisé en ce que les deux supports de poils (14, 15) sont fixés à des bras (60, 61) qui sont montés de façon à pivoter autour d'un axe de pivotement agencé parallèlement à l'axe longitudinal (3) ou autour de l'axe longitudinal (3) lui-même.

13. Elément de brossage suivant la revendication 12, caractérisé en ce qu'il est prévu un ressort (64) qui exerce directement ou indirectement une force sur les deux supports de poils (14, 15) dans la direction d'une position de départ (66).

14. Elément de brossage suivant l'une des revendications 12 et 13, caractérisé en ce que l'arbre (7) et les deux bras (60, 61) sont montés sur la même broche de palier (6).

15. Elément de brossage suivant l'une des revendications 1 à 14, caractérisé en ce que les supports de poils (68, 69, 75, 76) présentent au moins dans une direction une courbure ovale (70, 71, 72, 73, 77, 78).

16. Elément de brossage suivant la revendication 15, caractérisé en ce que les courbures ovales (77, 78) des deux supports de poils (75, 76) sont tournées l'une vers l'autre.

17. Elément de brossage suivant l'une des revendications 1 à 16, caractérisé en ce qu'une partie des poils (16, 17, 79, 80) qui font saillie de chacun des deux supports de poils (75, 76) forment entre eux un angle (81).

18. Elément de brossage suivant la revendication 17, caractérisé en ce que les poils (79, 80), qui sont tournés les uns vers les autres, des deux supports de poils (75, 76) forment un angle aigu (81) entre eux et en ce que les poils (16, 17) restants sont agencés chaque fois approximativement parallèlement à l'axe de brosse (24, 25).

19. Elément de brossage suivant l'une des revendications 1 à 18, caractérisé en ce que les poils (16, 17, 84, 85) qui font saillie de chacun des deux supports de poils (14, 15, 75, 76) sont de longueurs différentes.

20. Elément de brossage suivant la revendication 19, caractérisé en ce que la longueur des poils (16, 17, 84, 85) à une distance s'agrandissant à partir des poils (16, 17, 79, 80) tournés les uns vers les autres s'agrandit également.
